# EUROPEAN PATENT APPLICATION

(11) **EP 2 592 573 A1**
(43) Date of publication of application: **15.05.2013**
(21) Application number: 12160105.8
(22) Date of filing: 19.03.2012
(51) Int. Cl.: G06F 17/30

(54) **Prioritized searching**

(30) Priority: 12.11.2011 IN MU32062011
(71) Applicant: Tata Consultancy Services Limited, Mumbai 400 021 Maharashtra (IN)
(72) Inventor: Dani, Jayant, 400093 Mumbai (IN); Goel, Rupesh, 400093 Mumbai (IN)
(74) Representative: Meissner, Bolte & Partner

(57) **Abstract**

Systems and methods for performing prioritized search are described. In one implementation, text based results (122) based on a comparison between at least one search terminology and at least one asset attribute associated with each of plurality of assets, are obtained. Once obtained, at least one problem statement based on a comparison between the at least one search terminology and a problem statement attribute associated with each of a plurality of problem statements, is selected. For at least one selected problem statement, at least one asset is identified, from amongst a plurality of assets associated with the at least one selected problem statement. The at least one asset is identified based on a comparison between the at least one search terminology and a metadata associated with the asset, to obtain problem based results (124). The text based results (122) and the problem based results (124) are merged to obtain a prioritized search result.

## Description

### TECHNICAL FIELD

The present subject matter, in general, relates to searching and, in particular, relates to prioritizing search results, for example, in applications, such as searching for reusable software components.

### BACKGROUND

The ever-dynamic software industry constantly witnesses development of new software products. The software products may include both complete software applications and standalone sub-modules of the software application. Such software applications or products are generally developed for a specific purpose, such as banking software for banking, or an accounting software for use in keeping accounts. With the increasing demand for cost optimization, the optimization of software development process is also desired. In order to implement or further build on existing functionalities for different applications, code portions may be manually created.

There are various problems that are associated with the development of software. To name a few, lack of expertise, lack of knowledge of prior software, cost, maintenance, time delay, etc., which can all be addressed by optimizing the software development process. Furthermore in cases where the functionalities similar to those that have been implemented previously, manual efforts for code generation may be not optimal to the process of software development. In such cases, reusability of software code portion can optimize the software development process by reducing the manual effort r for implementing the application software.

An optimized reuse of software can be achieved by having a prior knowledge of the earlier software and by identifying factor of development over the earlier software. Most often than not software developers tend to search the existing databases or computer systems to identify the most appropriate reusable software, or a code, program in an existing application.

In recent times, reuse of software products has been identified as one of the solutions for rapid development and deployment of the software products. More often than not, a software product developed for a certain application or a component of that product can be modified and reused in another application similar to the application for which it was earlier developed.

### SUMMARY

This summary is provided to introduce concepts related to systems and methods for prioritized searching and the concepts are further described below in the detailed description. This summary is neither intended to identify essential features of the claimed subject matter nor is it intended for use in determining or limiting the scope of the claimed subject matter.

Systems and methods for performing prioritized search are described. In one implementation, text based results based on a comparison between at least one search terminology and at least one asset attribute associated with each of plurality of assets, are obtained. Once obtained, at least one problem statement based on a comparison between the at least one search terminology and a problem statement attribute associated with each of a plurality of problem statements, is selected. For at least one selected problem statement, at least one asset is identified, from amongst a plurality of assets associated with the at least one selected problem statement. The at least one asset is identified based on a comparison between the at least one search terminology and a metadata associated with the asset, to obtain problem based results. The text based results and the problem based results are merged to obtain a prioritized search result.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to reference like features and components.

Fig.1 illustrates a prioritized search system, in accordance to an implementation of the present subject matter.

Fig. 2 illustrates a method of prioritizing search results, in accordance with an implementation of the present subject matter.

### DETAILED DESCRIPTION

Systems and methods for prioritizing search results obtained based on text-bases search and problem-based search are described herein. The systems and methods can be implemented in a variety of computing systems. The computing systems that can implement the described method(s) include, but are not restricted to, mainframe computers, workstations, personal computers, desktop computers, minicomputers, servers, multiprocessor systems, laptops, mobile computing devices, and the like.

As indicated previously, the process of software development is complex, and in many cases, time consuming. A majority of the time consumed is attributed to the manual coding of code portions that would eventually be used for developing a software application. Code reusability allows for reusing code portions for implementing functionalities that have been previously utilized previously in other applications. To this end, the relevant code portions need to be searched for, in order to determine code portion for implementing the functionalities. This would consequently tend to optimize

Generally, searching in computer systems or databases is implemented on the basis of semantic checks of text, word, partial word, etc. Furthermore, the results that are eventually provided may be ranked based on a number of factors, such as extent of similarity between the search query, and the relevance. The users, with the help of the semantic search are able to gather information that is stored on the systems or databases.

Typically, the semantic text based search that work on the basis of semantic check of word, partial word, text , etc., provide results that may or may not be pertinent to what the user is looking for. Furthermore, the appropriate result may be listed not amongst the first few results, which may give the impression that the search results, say provided after ten results, are not relevant.

System and method for conducting and prioritizing searches are described. In one implementation, the search is conducted based on problem statements, say in a problem database, and based on one or more user queries. In one implementation, the problem database can be considered to be a depositary of problem statements attached with each reusable asset. Each of the problem statement is attached with one or more assets containing their detailed definition and metadata information. The assets are further associated with one or more functionalities which are addressed and implemented by the assets, or once or more issues that the asset can be used to address. Furthermore, the assets are also associated with parameters, such as metadata associated with the assets, user rating, download, overall rating, and so on. For example, the asset can be associated with information that may indicate how many times the asset under consideration has been utilized for implementing one or more specific functionalities.

As indicated previously, a search query in the forum of a search string is received, say from one of the users. In one implementation, the search string can be parsed or tokenized. For example, the search string can be parsed to determine one or more search terminologies, which constitute the search string provided by the user. In one implementation, while parsing, normally used vocabulary can be ignored to determine one or more terminologies.

Once the search terminologies are obtained, related assets within one or more problem statements can be identified based on the one or more search terminologies. In one implementation, the asset can be identified based on the textual similarity of the title of the asset and one or more search terminologies. A similarity match between the search terminologies used and the title of the asset exceeding a threshold value can result in the asset being considered for further analysis, as text based results.

Furthermore, problem statements having attributes similar to the search terminologies are determined. An example of such a problem statement attribute, i.e. an attribute associated with the problem statement includes problem title. Other such attributes would also be within the scope of the present subject matter, for example, problem title, problem description. Once the relevant problem statements are determined, assets within the relevant problem statements are selected based on metadata associated with each of the asset. In one implementation, the number of assets can be further filtered to give problem based results, based on further additional parameters, examples of which include, but are not limited to, user rating, download, overall rating, and so on.

The results obtained based on the problem based results and the text based results are merged and sorted to provide a final search result. The final results can be displayed to the user. In one implementation, the merged results can be further sorted for providing the more relevant and appropriate search results upfront. In one implementation, the merging and sorting can be based on one or more rules defined by the user. The rules may in turn be based on metadata associated with the asset

As also indicated previously, in one implementation, the results are also filtered based on rating of hits per user of a particular document or a file. The more the hits per user rating, the better the chances for the results to be displayed. Further, the higher the hits per user rating, the higher are the chances the results are displayed ahead of the other results. The text based results can also be filtered based on the hits per user rating parameter. In one implementation, apart from hits per user rating parameter, number of downloads is also considered as a parameter to filter the search results. In one implementation, overall rating of the asset is also considered as a parameter to filter the search results. In an implementation, the hits per user rating, number of downloads and the overall rating are together called as rating parameter, which is considered both by the problem database and the asset database to filter the search results. As will be appreciated by a person skilled in the art, the above further additional parameters can be utilized either alone or in combination with each other, without deviating from the scope of the present subject matter.

While aspects of described systems and methods for prioritizing search results can be implemented in any number of different computing systems, environments, and/or configurations, the implementations are described in the context of the following exemplary system architecture(s).

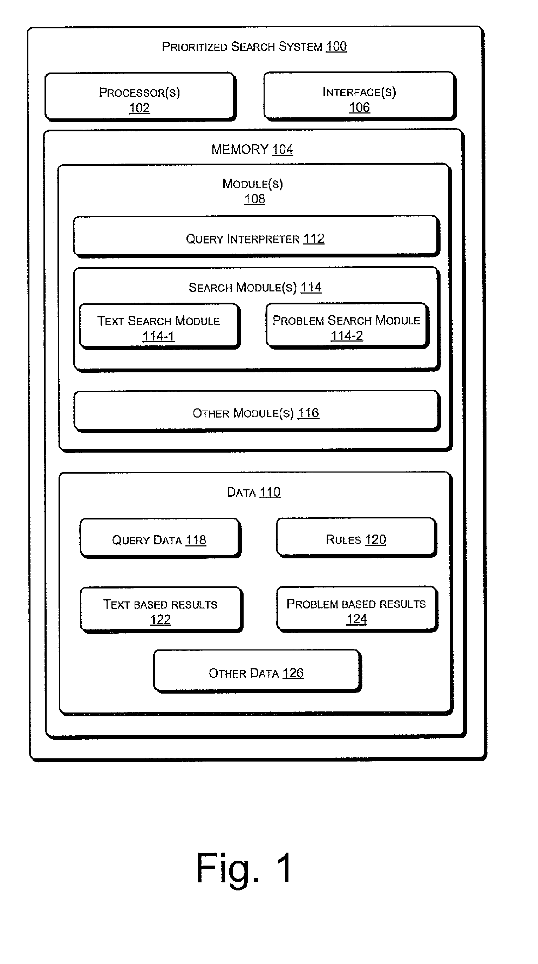

Fig.1 illustrates a prioritized search system 100, in accordance with an implementation of the present subject matter. In one implementation, the prioritized search system 100 includes a processor(s) 102, a memory 104 coupled to the processor(s) 102, and an interface(s) 106. The processor(s) 102 may be implemented as one or more microprocessors, microcomputers, microcontrollers, digital signal processors, central processing units, state machines, logic circuitries, and/or any devices that manipulate signals based on operational instructions. Among other capabilities, the processor(s) 102 are configured to fetch and execute computer-readable instructions stored in the memory 104.

The interface(s) 106 may include a variety of software and hardware interfaces, for example, a web interface, a graphical user interface, etc., allowing the prioritized search system 100 to interact with other devices. Further, the interface(s) 110 may enable the prioritized search system 100 to communicate with other computing devices, such as web servers and external data servers (not shown in figure). The interface(s) 106 can facilitate multiple communications within a wide variety of networks and protocol types, including wired networks, for example LAN, cable, etc., and wireless networks, such as WLAN, cellular, or satellite. The interface(s) 106 may include one or more ports for connecting a number of devices to each other or to another server. The interface(s) 106 can further serve as interface between the prioritized search system 100 and one or more problem databases (not shown in Fig. 1). The problem statements, in one implementation, can include one or more problem statements. Each of the problem statements can further include a plurality of assets, wherein each of the assets identify assets that can be used for addressing one or more specific issues, or implement a specific/required functionality.

The memory 104 can include any computer-readable medium known in the art including, for example, volatile memory (e.g., RAM), and/or non-volatile memory (e.g., EPROM, flash memory, etc.). In one implementation, the memory 104 includes module(s) 108 and data 110. The modules 108 further include a query interpreter 112, a search engine(s) 114, and other module(s) 116. The search module(s) 114 further include a text search module 114-1 and a problem search module 114-2. It will be appreciated that one or more of the module(s) 108 may be represented as a single module or a combination of different modules.

Additionally, the memory 104 further includes data 110 that serves, amongst other things, as a repository for storing data fetched processed, received and generated by one or more of the modules 108. The data 110 includes, for example, query data 118, rules 120, text based results 122, problem based results 124, and other data 126. In one implementation, query data 118, rules 120, text based results 122, problem based results 124, and other data 126, may be stored in the memory 104 in the form of data structures. Additionally, the aforementioned data can be organized using data models, such as relational or hierarchical data models.

In operation, amongst other things, the query interpreter 112 analyzes the search string or search query received from the user. In an implementation, the user presents the prioritizing search system 100 with one or more search queries. The search queries can be provided in the form of a search string. In one implementation, the one or more search strings can be in the form of words in natural language, partial words, text, letters, numerals, special characters, symbols, etc. The query interpreter 112 receives the one or more search strings presented by the user and determines one or more search terminologies which are based on the search string provided by the user. The one or more search strings and the search query created by the query interpreter 112 can be stored in the form of query data 118 in the memory 104.

In one implementation, the search terminologies obtained from the search query may be indicative of at least one specific technology, specific code portion or an asset to which the search query is associated. For purposes of reusability, an asset can be considered to include multi-application software code which can be utilized as a functional component in an application for which it was not initially intended. Furthermore, such assets can be utilized for addressing one or more issues. For example, an asset that functions for user authentication can be utilized across multiple applications.

In one implementation, the query interpreter 112 scans the input query provided by the user to obtain one or more search terminologies that are indicative of one or more appropriate problem descriptions, based on which the user may want to conduct a search on. In one implementation, such terminologies can also be indicative of the subject matter to which the input query is supposedly related to. For instance, for a search string "testing tool in Java" provided by the user, the query interpreter 112 may determine term "*testing tool*" and "*Java*" as possible search terminologies.

As indicated previously, such problem based searching can also be utilized for implementing code reusability. In such case, the query interpreter 112 may determine that the input query relates to search for assets, that are reusable code portion, related to *Java* based *testing tools.* The present description is provided from the perspective of searching for assets, say for the purpose of implementing code reusability. However, it should be noted that other implementations and applications would also be included within the scope of the present subject matter.

In one implementation, once the search terminologies are determined, the search module 114 searches for one or more assets in problem statements within a problem database. As also indicated previously, the problem statement may further include one or more assets, wherein each of the assets includes an asset identifiable by a title. The asset within the problem statements further can be associated with metadata and further additional parameters. In one implementation, the metadata can indicate the subject matter of the asset along with parameters, such as user ratings, overall ratings, number of downloads, etc. It would be appreciated that other additional parameters included within the problem statements would be still be within the scope of the present matter. Similarly, other problem databases may also exist.

As also indicated in Fig. 1, the search module 114 further includes a text search module 114-1 and problem search module 114-2. In operation, the text search module 114-1 obtains text based results based on a comparison between at least one search terminology and at least one asset attribute, i.e. an attribute associated with an asset. The text search module 114-1 searches one or more problem statements based on the search terminologies obtained from the input query from the user. In one implementation, the text search module 114-1 searches for the assets within the problem statements for which the title matches with the search terminologies obtained by the query interpreter 112. For example, the text search module 114-1 can compare the title of the assets within each of the searched problem statements, and determine a matching criterion, The matching criterion can indicate, in one implementation, the extent of similarity between the search terminologies and, say the title of the assets. The assets, for which the matching criterion exceeds a predefined threshold, can be selected for further analysis. The present implementation describes the matching of the title associated with the problem statements. In one implementation, the predefined threshold for the matching criterion is configurable, and can be changed. In another implementation, the text search module 114-1 further filters the assets based on one or more predefined set of rules obtained from rules 124. The results shortlisted by the text search module 114-1 can be stored in text based results 122.

The problem search module 114-2 then, based on the search terminologies, compares the search terminologies with attributes associated with the problem statements. In one implementation, the problem search module 114-2 compares the search terminologies with a title associated with the relevant problem statements, to determine the similarities between the compared search terminologies and the attributes associated with the relevant problem statements. Based on the similarity between the search terminologies and the problem statement attributes, the relevant problem statements can be shortlisted, For example, all problem statements for which the similarity between the search terminologies and the attributes, i.e., the title of the problem statements is greater than a threshold level, say 60%, would be shortlisted. In one implementation, the attribute of the problem statements can include, but is not limited to, title. Other types of attribute would also be within the scope of the present subject matter. Furthermore, in another implementation, one or more rules from rules 124 can be used for short-listing the relevant problem statements. For example, the problem search module 114-2 may shortlist the top 10 results which are obtained as a result of the comparison between the problem statement attributes and the search terminologies.

Once shortlisted, the problem search module 114-2 further searches the shortlisted problem statements based on the metadata. As indicated previously, the metadata associated with each of the problem statement can indicate the technical field or the subject matter with which the assets may relate to. For example, all problem statements related to *Java* may include metadata field as *Java,* thereby indicating that the particular asset under consideration is related to Java programming language. Similarly, the metadata can indicate, without any limitation, technical fields other than *Java.*

The problem search module 114-2 may further shortlist one or more assets based on additional parameters. The additional parameters may additionally indicate parameters that may not be otherwise specified in the metadata. Examples of additional parameters include, but are not limited to, user rating, number of downloads, overall ratings, etc. It would be appreciated that the additional parameters as indicated may be pertinent from the perspective of implementing code reusability. However, other forms of additional parameters may also be included without deviating from the scope of the present subject matter.

For short-listing based on the metadata and the additional parameters, the problem search module 114-2, in one implementation, may determine a degree of similarity between the search terminologies, the metadata and the additional parameters. If the degree of similarity is greater than a threshold value, the asset under consideration can be shortlisted, and stored in problem based results 124. In one implementation, the problem search module 114-2 can determine the similarity between the search terminologies, and the metadata and additional parameters, based on one or more rules obtained from rules 120.

Once the problem based results 124 are obtained, both the text based results 122 and the problem based results 124 are merged and sorted by the problem search module 114-2 to obtain a prioritized search result. The merging and sorting of the text based results 122 and the problem based results 124 can be based on rules 124. The rules 120 for merging and sorting are predefined set of rules that are based on metadata and additional parameters associated with the assets. Once merged and sorted, the results can be provided to the user for further actions. The working of the prioritized search system 100 can be better understood in conjunction with the following implementation. The present implementation, is only an illustration of one of the many possible implementations, and does not limit the scope of the present subject matter in any way.

### AN IMPLEMENTATION

In the present implementation, a search query "*List payment gateway adapter for website's online billing integration in Java*", is received by the prioritized search system 100 by any of the users who may be interacting with the prioritized search system 100. The prioritized search system 100 further is coupled to a problem database (not illustrated in Fig. 1).

Table 1 illustrates the problem statements for problem descriptions, i.e., problem statements "*Payment Gateway*", "*Web-based Online Payment Billing*" and "*Integration Adaptor Framework*".

**Table 1**

| **Problem Statement- 1: "Payment Gateway"** | | | | | | | | |
|---|---|---|---|---|---|---|---|---|
| | | **Technology/Metadata** | **Additional Parameters** | | | **Matching compatibility** | | |
| | *Asset Title* | | *User rating* | *No. of downloads* | *Over all rating* | Total words | Words Matched | % |
| | Payment gateway communication | ASP , .net | 4 | 4 | 4 | 3 | 2 | 0.67 |
| | IVR interface and gateway | Java | 4 | 30 | 2 | 3 | 1 | 0.33 |
| | Payment Gateway integration | Java | 2 | 30 | 4 | 3 | 2 | 0.67 |
| | EBPP-electronics bill presentation and payment | Java, Socket | 4 | 80 | 4 | 6 | 2 | 0.33 |
| | Payment Card processing | Java, C++ | 5 | 20 | 3 | 3 | 1 | 0.33 |
| | PHP & RBS payment gateway Integration | PHP | 5 | 60 | 3 | 5 | 3 | 0.60 |
| | REXX Payment Gateway framework | REXX | 5 | 5 | 5 | 4 | 2 | 0.50 |
| | iPayment Integration | Weblogic, Java | 4 | 10 | 3 | 2 | 2 | 1.00 |

| **Problem Statement - 2: "Web-based Online Payment Billing"** | | | | | | | | |
|---|---|---|---|---|---|---|---|---|
| | | **Technology/Metadata** | **Additional Parameters** | | | **Matching compatibility** | | |
| | *Asset Title* | | *User rating* | *No. of downloads* | *Over all rating* | Total words | Words Matched | % |
| | AP online | Java | 3 | 21 | 2 | 2 | 1 | 0.00 |
| | Oracle Ebilling and Payment | Oracle, Java | 2 | 45 | 3 | 3 | 2 | 0.67 |
| | UAE Oracle Payroll | Oracle, C | 3 | 56 | 2 | 3 | 0 | 0.00 |
| | Late Payment charging module | Java, JRE | 4 | 55 | 1 | 4 | 1 | 0.25 |
| | Generic Payment model for BFSI | Java, C | 4 | 23 | 4 | 5 | 1 | 0.20 |
| | Payement Method for AP online | Java | 5 | 3 | 5 | 4 | 1 | 0.25 |

| **Problem Statement-3: "Integration Adapter Framework"** | | | | | | | | |
|---|---|---|---|---|---|---|---|---|
| | | **Technology/Metadat a** | **Additional Parameters** | | | **Matching compatibility** | | |
| | *Asset Title* | | *User rating* | *No. of downloads* | *Over all rating* | Total words | Words Matched | % |
| | Adapter Pattern Example | Java | 4 | 70 | 4 | 3 | 0 | 0.00 |
| | IFMS - Integration Financial Management system | Java | 4 | 90 | 4 | 5 | 0 | 0.00 |

In the above example, the illustrated Table 1 further includes the column titled *Matching Compatibility* of the search query with one or more of the assets within each of the problem statements. However, the same is provided only for sake of explanation. The problem databases and problem statements may not necessarily include the field *Matching Compatibility.* In one implementation, the *Matching Compatibility* can indicate the extent of textual similarity between one or more of the search terminologies and the item, say the title of the asset or the problem statement.

In operation, the prioritized search system 100 receives the search query "*List Payment gateway Adapter for Website's Online Billing Integration in Java*". The query interpreter 112, on receiving the search query determines one or more search terminologies. In one implementation, the query interpreter 112 parses the search query to obtain one or more search terminologies. For the purposes of the present implementation, the search terminologies include the words/phrases *payment gateway adapter.*

On receiving the search terminologies, i.e., *payment gateway adapter*, the problem search module 114-2 matches the search terminologies with the problem statement associated with the problem databases. The problem search module 114-2 can match the search terminologies and the problem statements based on predefined set of rules stored in rules 120. In an implementation, the problem statements which are close matches, say which have matching compatibility greater than 80% are selected. In another implementation, the matching compatibility threshold value can range from about 80% to 85%. Table 2 depicts an example of selection of problem statements based on the matching compatibility with the search terminologies.

**Table 2**

| Problem Statements | Total words | Words matched | % matched |
|---|---|---|---|
| Payment Gateway | 2 | 2 | 1.00 |
| Web based Online Payment Billing | 5 | 4 | 0.80 |

Once the problem statements are shortlisted based on the matching of the problem statements and the search terminologies, the problem search module 114-2 further shortlists the assets corresponding to the problem statements as indicated in Table 2. In one implementation, the problem search module 114-2 shortlists the assets based on metadata and the additional parameters, namely, user ratings, overall ratings and number of downloads. For example, the problem search module 114-2 based on the matching compatibility of the search terminologies and the title of the assets, a threshold value of the rating based additional parameter being greater than or equal to 3, and metadata being the programming language "Java" further shortlists the assets. The shortlisted, assets are listed as Table 3. In one implementation, the short listed assets, as listed in Table 3, are stored in problem based results 124..

**Table 3**

| Asset | Technology/Metadata | *Uses rating* | *No. of downloads* | *Overall rating* |
|---|---|---|---|---|
| Payment Card processing | Java, C++ | 5 | 20 | 3 |
| Payment Method for AP online | Java | 5 | 3 | 5 |
| EBPP-electronics bill presentation and Payment | Java, Socket | 4 | 80 | 4 |
| Late Payment charging module | Java, JRE | 4 | 55 | 1 |
| IVR interface and gateway | Java | 4 | 30 | 2 |
| Generic Payment model for BFSI | Java, C | 4 | 23 | 4 |
| iPayment Integration | Weblogic , Java | 4 | 10 | 3 |

Subsequently, the text search module 114-1 searches for assets based on a textual comparison between the title of the assets and the search terminologies. In one implementation, the problem search module 114-2 for which the matching between the search terminologies and the title of the assets is greater than 60%, can be selected. The selected assets are listed as Table 4. In one implementation, the selected assets can be stored as text based results 122.

**Table 4**

| Asset | Technology/Metadata | *User rating* | *No. of downloads* | *Overall rating* |
|---|---|---|---|---|
| Payment gateway communication | ASP ,.net | 4 | 4 | 4 |
| Payment Gateway integration | Java | 2 | 30 | 4 |
| PHP & RBS payment gateway Integration | php | 5 | 60 | 3 |
| Oracle Ebilling and Payment | Oracle, Java | 2 | 45 | 3 |

Once the text based results 122 and the problem based results 124 are obtained, the problem search module 114-2 merges and sorts the text based results 122 and the problem based results 124. In one implementation, the problem search module 114-2 merges and sorts the text based results 122 and the problem based results 124 based on one or more rules stored in rules 120. As also indicated previously, the rules 120 can be based on one or more of search terminologies, metadata, and the additional parameters. For example, the problem search module 114-2 merges and sorts the text based results 122 and the problem based results 124 for the assets containing the metadata or technology of language "Java", number of downloads greater than or equal to 10, and list size lesser than 10 are shortlisted before sorting based on descending order of priority. The merged and the sorted, as per the present implementation, are indicated below in Table 5.

**Table 5**

| S. No. | Asset | Technology/Metadata | *User rating* | *No. of downloads* | *Overall Rating* |
|---|---|---|---|---|---|
| 1 | Payment Card processing | Java,C++ | 5 | 20 | 3 |
| 2 | EBPP-electronics bill presentation and payment | Java, Socket | 4 | 80 | 4 |
| 3 | Late Payment charging module | Java, JRE | 4 | 55 | 1 |
| 4 | IVR interface and gateway | Java | 4 | 30 | 2 |
| 5 | Generic Payment model for BFSI | Java, C | 4 | 23 | 4 |
| 6 | iPayment Integration | Weblogic ,Java | 4 | 10 | 3 |
| 7 | Oracle Ebilling and Payment | Oracle, Java | 2 | 45 | 3 |
| 8 | Payment Gateway integration | Java | 2 | 30 | 4 |

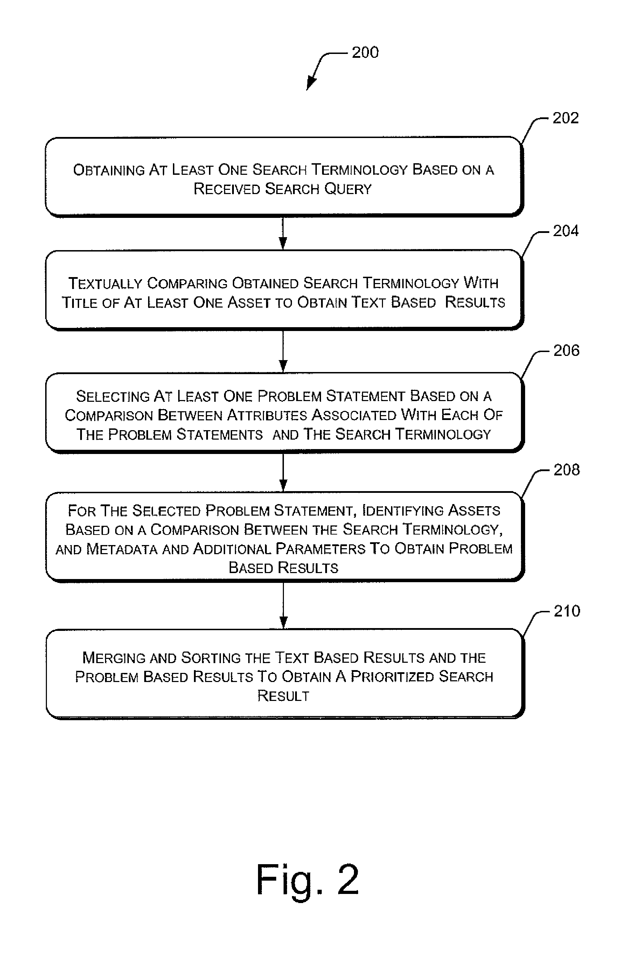

Fig. 2 illustrates a method 200 of prioritizing search results, in accordance with an implementation of the present subject matter. The exemplary method 200 may be described in the general context of computer executable instructions. Generally, computer executable instructions can include routines, programs, objects, components, data structures, procedures, modules, functions, and the like that perform particular functions or implement particular abstract data types. The method may also be practiced in a distributed computing environment where functions are performed by remote processing devices that are linked through a communication network. In a distributed computing environment, computer executable instructions may be located in both local and remote computer storage media, including memory storage devices.

The order in which the method is described is not intended to be construed as a limitation, and any number of the described method blocks can be combined in any order to implement the method, or alternate methods. Additionally, individual blocks may be deleted from the method without departing from the spirit and scope of the subject matter described herein. Furthermore, the method can be implemented in any suitable hardware, software, firmware, or combination thereof. The method described herein is with reference to the prioritized search system 100 and in the context of prioritizing search results based on a search conducted by a user. However, the method can be implemented in other similar systems albeit and in other organizations with a few variations as will be best understood by a person skilled in the art.

At block 202, one or more search terminologies are obtained based on a received search query. For example, the query interpreter 112 on receiving a search query from one of the users, obtains at least one search terminology from the search query. In one implementation, the query interpreter 112 can parse the search query to determine the search terminologies. While parsing, words used in the natural language, can be ignored. In one implementation, the search terminologies can be stored in query data 118.

At block 204, the obtained search terminologies and the title of various assets are textually compared to obtain the text-based results. For example, the text search module 114-1 compares the search terminologies with an asset attribute, for example, the title of the assets within one or more problem statements. As also indicated previously, the problem statements in turn can be present within a problem database. In order to obtain text-based results, the text search module 114-1 can determine a matching criterion. The matching criterion can be indicative of the extent of textual similarity between the search terminologies and the title of the assets. The text search module 114-1, for all assets, for which the matching criterion was greater than a predefined threshold, are selected and stored as text based results 122.

At block 206, one or more problem statements are selected. The problem statements are selected based on a comparison between one or more search terminologies and one or more attributes associated with the problem statements. For example, the problem search module 114-2 compares the search terminologies and an attribute, say the title, associated with the problem statements. On comprising, the problem search module 114-2 selects the problem statements for which the attribute, i.e., the title, matches with one or more of the search terminologies. In one implementation, the problem search module 114-2 matches the title and the search terminologies based on one or more rules from rules 120.

At block 208, the assets included within the selected problem statements are selected based on a comparison between the one or more search terminologies, and metadata and additional parameters associated with the problem statements. For example, the problem search module 114-2 on selecting the problem statements further compares one or more search terminologies with the metadata associated with the problem statements. In one implementation, the problem search module 114-2 may further also base the comparison based on additional parameters, examples of which include, user rating, overall rating, number of downloads, etc. In another implementation, the problem search module 114-2 selects the assets based on a degree of similarity between the search terminologies, and the metadata and the additional parameters, and/or one or more rules 120. Once selected, the assets can be included within problem based results 124.

At block 210, the text-based results and problem based search results are merged and sorted. For example, the problem search module 114-2 can merge and sort the text based results 122 and the problem based results 124 to obtain the prioritized search result. In one implementation, the problem search module 114-2 merges and sorts the text based results 122 and the problem based results 124 based on rules 120. Once merged and sorted, the results can be provided to the user from whom the search query was received.

Although implementations for prioritizing search results based on the search conducted for one or more search strings provided by the user have been described in language specific to structural features and/or methods, it is to be understood that the invention is not necessarily limited to the specific features or methods described. Rather, the specific features and methods are disclosed as exemplary implementations for methods and systems for prioritizing search results based on the search conducted for one or more search strings.

## Claims

1. A method for prioritizing search results, the method comprising:
obtaining text based results based on a comparison between at least one search terminology and at least one asset attribute associated with each of a plurality of assets;
selecting at least one problem statement based on a comparison between the at least one search terminology and a problem statement attribute associated with each of a plurality of problem statements;
identifying, for at least one selected problem statement, at least one asset amongst a plurality of assets associated with the at least one selected problem statement, based on a comparison between the at least one search terminology and a metadata associated with the asset to obtain problem based results; and
merging the text based results and the problem based results to obtain a prioritized search result.

2. The method as claimed in claim 1, wherein the at least one asset attribute comprises title associated with the asset.

3. The method as claimed in claim 1, wherein the obtaining the text based result set comprises:
deriving matching criterion based on the comparison between the at least one search terminology and the attribute associated with the asset; and
selecting the assets as text based results for which the matching criterion is greater than a configurable threshold.

4. The method as claimed in claim 1, wherein the problem statement attribute is a title associated with the problem statement.

5. The method as claimed in claim 1, wherein the metadata is indicative of a field of technology to which the asset is related to.

6. The method as claimed in claim 1, wherein the identifying the at least one asset is based on a comparison between the at least one search terminology and additional parameters associated with the asset.

7. The method as claimed in claim 6, wherein the additional parameters are selected from a group comprising a user rating, an overall rating, and number of downloads.

8. The method as claimed in claim 1, further comprising sorting the merged prioritized search result based on a predefined set of rules.

9. A prioritized search system (100) comprising:
a processor (102);
a memory (104) coupled to the processor (102), the memory (104) comprising:
text search module (114-1) configured to determine text based results (122) based on a comparison between at least one search terminology and at least one asset attribute associated with each of a plurality of assets;
problem search module (114-2) configured to,
identify, for at least one selected problem statement, at least one asset from amongst a plurality of assets associated with the at least one selected problem statement, based on a comparison between the at least one search terminology and parameters associated with the asset to obtain problem based results (124); and
merge and sort the text based results (122) and the problem based results (124) to obtain a prioritized search result.

10. The prioritized search system (100) as claimed in claim 9, further comprising a query interpreter (112) for obtaining at least one search terminology based on a search query received from a user.

11. The prioritized search system (100) as claimed in claim 9, wherein the problem search module (114-2) is further configured to select the at least one problem statement based on a comparison between the at least one search terminology and a problem statement attribute associated with each of plurality of problem statements.

12. The prioritized search system (100) as claimed in claim 11, wherein the problem statement attribute includes at least title.

13. The prioritized search system (100) as claimed in claim 9, wherein the text search module (114-1) is configured to obtain the text based results based on at least one predefined set of rules.

14. The prioritized search system (100) as claimed in claim 9, wherein the parameters comprises one of metadata and additional parameters associated with the problem statement.

15. The prioritized search system (100) as claimed in claim 9, wherein the problem search module (114-2) is configured to merge and sort the text based results and the problem based results based on rules (120), the rules (120) being based on at least metadata associated with the problem statement.

16. A computer-readable medium having computer-executable instructions that when executed perform acts comprising:
obtaining text based results based on a comparison between at least one search terminology and at least one asset attribute associated with each of a plurality of assets;
selecting at least one problem statement based on a comparison between the at least one search terminology and a problem statement attribute associated with each of a plurality of problem statements;
identifying, for at least one selected problem statement, at least one asset amongst a plurality of assets associated with the at least one selected Problem statement, based on a comparison between the at least one search terminology and a metadata associated with the asset to obtain problem based results; and
merging the text based results and the problem based results to obtain a prioritized search result.
